(19) **Europäisches Patentamt**
**European Patent Office**
**Office européen des brevets**

(11) **EP 2 150 066 A1**

(12) **EUROPEAN PATENT APPLICATION**

(43) Date of publication:
**03.02.2010 Bulletin 2010/05**

(51) Int Cl.:
**H04N 17/04** (2006.01)    **H04N 5/44** (2006.01)

(21) Application number: **08382032.4**

(22) Date of filing: **29.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Alcatel Lucent, S.A.**
**28045 Madrid (ES)**

(72) Inventor: **Macías Peralta, Jesús**
**c/o ALCATEL LUCENT, S.A.**
**28045, MADRID (ES)**

(74) Representative: **Elzaburu Marquez, Alberto**
**Elzaburu S.L.P.**
**Miguel Angel 21**
**28010 Madrid (ES)**

(54) **Procedure for measuring the change channel time on digital television**

(57)    Measurement procedure of the change channel time in a decoder to decode a received digital TV signal before it is delivered to a screen for viewing by a viewer who selects a desired channel, once the decoder is tuned to a coded signal stream MPEG2-TS, received from a transmitter of a digital TV system.

FIG. 1

EP 2 150 066 A1

Description

## OBJECT OF THE INVENTION

This invention refers in general to a procedure for measuring the change channel time in a digital TV broadcasting system.

## STATE OF THE ART

Today there are different digital TV broadcasting systems, and all of them have in common a coding/decoding stage which compresses the audio and video information before transmission, while maintaining acceptable audio and video quality levels. The most widely used system today is the Moving Pictures Expert Group standard, i.e., MPEG2, which includes 3 basic parts: Systems, Video and Audio.

The Systems layer, which multiplexes and synchronizes the audio and video layers, also admits the new and more efficient coding systems such as video MPEG4/AVC, audio MPEG4/AAC, etc., but maintaining the total stream as a transport frame MPEG2.

The audio and video coders provide at their output IO elementary streams ES. Each elementary stream is composed of access units, which are the coded representations of the presentation units, i.e., the decoded images or audio depending on whether video or audio is involved.

These data streams should be combined in an orderly way and amplified with different information that enables a decoder to separate them and guarantee synchronization of the image and sound during reproduction.

In the case of standard MPEG2, the combination of individual audio and video components forms a transport frame MPEG2, MPEG2-TS. Also, in MPEG2, this decoder is called Transport-System Target Decoder T-STD, and any transport frame MPEG2, which can carry elementary audio and video components MPEG1, MPEG2, MPEG4/AVC, MPEG4/AAC or others, should be able to be decoded correctly in this decoder.

In the case of the video component, and regardless of whether the coding is MPEG1, MPEG2, MPEG4/AVC, etc., the coding generates a continuous compressed video stream with frames, i.e., video images of type I, P and B.

A frame I, image type I, intra-frame, is coded without reference to other images, i.e., it contains all the necessary elements for its reconstruction. Frame I is followed by a set of frames P and B.

Frame P, image type P, predictive, is coded with respect to the type I image or another previous P, thanks to the prediction techniques with movement compensation. Frame B, image type B, half-duplex, is coded by interpolation between the two previous and following images of type I or P that frame it.

Once frames I, P and B have been received by the decoder, they are reconstructed, i.e., the original audiovisual signal is decoded to be viewed on the corresponding TV screen.

When a viewer changes the TV channel, it is not possible to immediately see the new desired channel because there is a delay in acquisition of the signal of the desired channel, since a frame I must be received to be able to decode the first image of the desired TV signal.

Therefore, the viewer must wait for a short time - seconds - before beginning to see and hear the digital TV channel, which may initially be perceived as a drawback compared to analog TV where this time is very short - milliseconds.

The delay time in the display of the image of the new desired channel, which is called change channel time, is a parameter that should be measured in order to assess the service quality and, consequently, the degree of viewer satisfaction.

Each decoder is characterized by a change channel time, which is a function of the time required by the referenced decoder to complete the process of decoding the new channel selected by a user. As a general rule, this change channel time is primarily a function of the configuration of the video coder used in the platform and, to a lesser extent, of the video content being coded.

It should be noted that, with MPEG2, it is assumed that in a decoder or T-STD, once the first image I is received and after waiting for the necessary conditions for start-up to be met, the decoding and presentation to the viewer are done instantaneously; however, in practice, it takes some additional time, and it is the decoder designer's responsibility to reduce as much as possible the additional delay introduced by a real decoder with respect to an ideal decoder or T-STD, as well as the delays of the transport network, change channel protocols, etc.

Therefore, the measurement of the ideal change channel time indicates the minimum channel time, which is imposed by the video coder, using an ideal decoder.

The real change channel time on a digital TV platform can never be less than the above ideal time.

## CHARACTERIZATION OF THE INVENTION

This invention aims to resolve or mitigate one or more of the above indicated drawbacks through a measurement procedure for the change channel time of a decoder for digital TV, as claimed in claim 1. Embodiments of the invention are provided in the dependent claims.

One object of the invention is to provide a procedure to measure the change channel time with an ideal decoder, regardless of the different equipment used to broadcast a multimedia signal via a digital TV system. This time will hereinafter be called minimum change channel time that provides the maximum service quality.

Still another object of the invention is to provide a procedure to measure the minimum change channel time, regardless of the compression procedure used to code/decode the signal to be broadcast via the digital TV system.

Still another object of the invention is to assure the measurement of the ideal change channel time in a system that includes equipment from different manufacturers.

Still another object of the invention is to develop a simple procedure to measure the minimum change channel time which, in turn, contributes greater reliability and scalability to the design of the digital TV platform architecture, enabling a comparison between different types of video coders.

Still another object of the invention is that the measurement procedure is implemented using a computer program built into a computer readable medium in which each function is executed using a code segment.

Still another object of the invention is to incorporate the minimum change channel time measurement procedure into a metering equipment, such as a video analyzer which is a device adapted to analyze video included in the digital TV platform.

Still another object of the invention is that the measurement procedure can be used both in real time applications, such as measurement of the TV channel at the output of a coder or at another point of the digital TV platform, and in non-real time or offline applications in which a computer file that contains a capture of the TV channel generated by the coder is analyzed.

Another object of the invention is to make the introduction of digital TV system extensions more flexible without requiring adaptations of the change channel time measurement procedure, both at the physical development - hardware - level and at the development level of code segments - software - executed by the hardware thanks to a common, less complex procedure.

## BRIEF DESCRIPTION OF THE FIGURES

A more detailed explanation of the invention is provided in the following description based on the attached figures, in which:

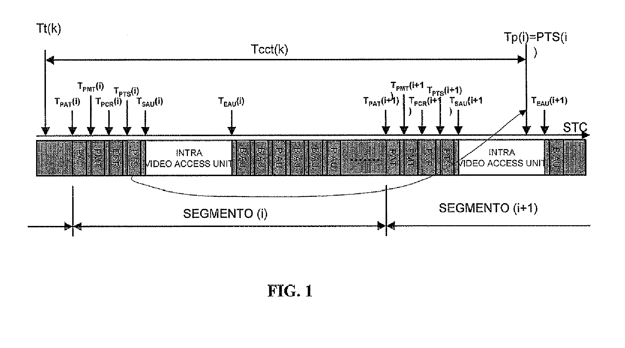

Figure 1 shows the segments of a stream in accordance with standard MPEG-TS.

## DESCRIPTION OF THE INVENTION

At present, the transport frame MPEG-2 is the most widely used format for broadcasting of digital TV channels; therefore, the invention is described using the concepts and definitions associated with the transport frame MPEG2 (ISO/IEC 13818-1), also called MPEG2-TS (Motion Picture Experts Group-Transport Stream), as well as the ideal decoder model, Transport - System Target Decoder T-STD, also defined in this standard.

As a general rule, coded audiovisual contents are broadcast in a digital TV system as per standard MPEG1, MPEG2, MPEG4/AVC, MPEG4/AAC, VC1 or similar in the form of individual components of audio, video, etc., multiplexed in a transport frame MPEG-2 (MPEG2-TS or Transport Stream) or similar that comprises the Digital TV channel.

In the transport stream MPEG-2, all the program components are multiplexed and it incorporates the system time clock STC, which enables synchronized reproduction of the different audio and video components in the decoder.

A transport frame MPEG2 may include a Single Program Transport Stream (SPTS) or several channels of TV Multiple Program Transport Stream (MPTS), and therefore it includes the necessary signalling of Program Specific Information PSI in the form of tables, such as the program association table PAT, program map table PMT, etc., which are used to select the desired TV channel.

Therefore, the system analyzes a transport frame MPEG2, i.e., MPEG2-TS, which may be single program SPTS or multiple program MPTS and the audio and video components of which may be of various types.

The audio signal has no influence on the change channel time and, therefore, it is not analyzed by the system.

The rest of the channel components that are not video, such as subtitles, teletext, DVB-SI, data, etc. are also ignored.

The measurement procedure of the ideal change channel time can be executed in real time, online and offline.

In an online environment, the time analyzer measures the ideal change time of the channel that is connected electrically, optically, etc. to the output of the coder or of a multiplexer MPEG2 and that may be a single channel SPTS or multiple channel MPTS frame.

In the latter case, the analyzer lists the TV services present in the PAT to select one on which to perform the change channel time analysis.

The coder normally includes an output ASI interface, IP interface or similar; therefore, the time analyzer also includes the corresponding interface to be able to receive/capture the MPEG-2 stream.

In the case in which the time measurement is done offline, the transport stream MPEG-2 is stored in a file before it is analyzed.

The transport stream includes signal elementary streams ES that pertain, in turn, to several audiovisual programs sequentially arranged to represent the chronological order of the transport packets pertaining to the same elementary stream ES.

The transport stream also includes time stamps of the program clock reference PCR, which enable synchronization of the decoder clock with the clock of the program to which the transport packets belong; these stamps appear periodically.

The time stamps are the mechanism provided by the transport layer of MPEG-2 to assure correct synchronization in the decoder between elementary streams ES that are related. One of these time stamps is the presentation time stamp PTS. It specifies the moment at which an access unit should be retrieved from the decoder buffer to be decoded and then presented to the viewer.

The change channel time is measured between a coder and a decoder, in this ideal case, since both devices must be synchronized so that the frames I, P and B, generated and sent within the MPEG-2 stream from the coder to the decoder, can be reordered by the referenced decoder for display.

For example, the protocol of transport frame MPEG-2 includes a timing model on which the description of the developed time measurement procedure will be supported.

Thus, the time analyzer acquires a synchronization reference from the time stamps of the program clock reference PCR, which enable synchronization of the decoder clock with the clock of the program to which the transport packets belong, i.e., system time clock STC; therefore, it is a local recovery clock generated on the basis of PCR time stamps.

The time that elapses between PCR time stamps is measure, assuming that the binary speed - bit rate - of the MPEG-2 stream is constant between two consecutive PCR stamps. The PCR time stamps are found in the MPEG-2 stream transport layer and enable synchronization of the decoder clock with the clock of the program to which the transport packets belong.

The time measurement procedure measures the time elapsed from the instant of time $Tt(k)$ in which an ideal decoder tunes the frame MPEG2-TS to the instant of time $Tp(i)$ in which it is capable of presenting the images to the viewer, i.e., at one of the outputs of the decoder.

The elapsed time thus measured represents the change channel time of the ideal decoder. It should be noted that this time is variable and is a function of the type of compression used by the coder and, for example, of the content that is coded.

As mentioned previously, the presentation time stamps are found within the PES-packets. Likewise, when a viewer makes a TV channel change, the decoder cannot decode the MPEG stream to generate the TV signal desired by the viewer (scratch) until a frame I is received.

To summarize, the time analyzer measures the time from when a viewer makes a channel change, an instant of time which for the procedure coincides with time $Tt(k)$, until the first type I frame is received in the decoder, the moment at which the decoder decodes the MPEG-2 stream, and it stops counting the time in the instant when the decoder sends to one of its outputs the video images for the program selected by the viewer, instant $Tp(i)$.

Consequently, the time analyzer accesses the stream transport layer, MPEG2-TS layer, the packetized elementary stream layer, PES layer, and the video elementary stream layer, VES layer.

The first two layers correspond to the MPEG2-TS protocol and the third layer depends on the type of video coding, e.g., MPEG-1, MPEG-2, MPEG4-2, MPEG4-10 (AVC) or similar, which are transported by the continuous stream.

When the viewer makes a channel change, the set top box STB should tune in to the elementary stream ES of the selected channel; this tuning will occur in an instant of time $Tt(k)$ and the analyzer will measure the time that elapses between that instant of time $Tt(k)$ and the instant of time $Tp(i)$ when the first frame I of video access unit, corresponding to the selected channel, is decoded and presented to the viewer for viewing.

The measurement procedure described above is executed for the ideal decoder T-STD, ideal TS system target decoder, or a real decoder tuning a channel received and selected for decoding within a signal transmitted by a digital TV broadcaster that transports a multitude of digital TV channels.

The stream containing the multiple TV channels received is previously tuned to proceed with its decoding in instant $Tt(k)$.

The first step that is taken is to obtain information on the TV channels included in the received stream. This step is taken by retrieving the information contained in the program association table PAT. Once the PAT table is obtained, information is retrieved on the different packet identifiers PIDs, associated with the program map table PMT also included in the received stream and regarding a program, which should be decoded to be viewed by the viewer.

Obviously, if the steam is multiple program MPTS, only the packet identifiers PIDs of the video components associated with the PMT table for the program being displayed will be retrieved, and these will be used to analyze the change channel time that is being developed. Note that the stream transports several programs and, therefore, there is a PMT table associated with each program.

Once the PMT table of the selected channel is obtained, the PCR clock signal of this same channel is retrieved and this, in turn, will be used by the analyzer to calculate the change channel time.

To summarize, if the transport stream is multiple program MPTS, the PAT table will contain several PMT tables and it will have to be decided in which of these, i.e. with which program, the analysis is to be made. For single program frames SPTS, no selection needs to be made because there is only one PMT and one TV program.

Therefore, the analyzer seeks the first PAT table of the stream, it obtains the PID of the PMT table from it, and from this it obtains the PIDs where the video packets and the PCR time stamps are transmitted.

When the next program clock reference PCR clock is received, the local clock of the analyzer STC will initialize. It should be noted that the first valid program clock reference PCR does not necessarily have to be immediately subsequent to a PMT table; therefore, the analyzer should search for it at some moment before the presentation time stamp PTS(i) of the video access unit (i) of the intra-video type I.

The analyzer then analyzes the PES layer and the video layer of the different PIDs transported by the video stream and seeks the next and closest type I video access unit to retrieve the presentation time stamp PTS associated with this video access unit. This time is called Tp(i).

Meanwhile, the system searches for any type of frame and stores its presentation time and decoding.

The presentation stamp PTS is optional; therefore, the analyzer stores the presentation time PTS of the access units prior to the type I video access unit.

Thus, if the first localized frame I does not have a presentation time stamp PTS, the analyzer attempts an interpolation with the last presentation time stamp PTS available after the instant Tt(k) plus the time of the number of frames, in the presentation order that precedes the type I frame.

It should be noted that if no valid presentation time stamp PTS or program clock PCR is available, the type I frame found is not valid for presentation to the viewer and it will be rejected, and there will be a wait for the next type I frame. In other words, the measured change channel time will increase in this period of time.

As commented above, the ideal change channel time measured for the ideal T-STD is defined by the expression $T_{cct}(k) = T_P(i). - Tt(k)$, where the period of time used by the ideal decoder STD to make a channel change is measured between the instant in which the viewer makes the channel change and the desired program image is presented to the viewer in the selected TV channel.

If statistics on the change channel time are to be generated, the above process is repeated as many times as desired on the stream transmitted to the set top boxes of the potential viewers of a digital TV system.

These statistics on the ideal change channel time will serve for a designer of the digital TV system architecture to select the video coder that offers the best features and to determine what aspects of the transport and access network and of the decoder should be optimized to achieve, in a real, complete system such as the Digital TV platform, a reduced change channel time as near as possible to the calculated ideal time.

It should be noted that the MPEG stream can be analyzed online or offline.

A computer program built into a readable medium by the time analyzer measures the ideal change channel time on the frame MPEG2, simulating the action of a large number of viewers requesting channel changes.

With regard now to Figure 1, a digital TV broadcasting system as per MPEG-TS transmits information according to this standard MPEG-TS, and this information is received for decoding before being viewed by the viewers.

For the decoding to be done in the different decoders, the following times of the elementary streams ES associated with MPEG-TS must be retrieved: $T_{PAT}$ is the instant in which the last bit of a PAT table is input into the decoder T-STD; $T_{PMT}$ is the instant in which the last bit of a PMT table is input into the same decoder T-STD; $T_{PCR}$ is the instant in which the last bit of the PCR field is input into this decoder T-STD; $T_{PTS}$ is the instant in which the last bit of the PTS field is input into the T-STD; $T_{SAU}$ is the instant in which the first bit of a video access unit is likewise input into the T-STD; $T_{EAU}$ is the instant in which the last bit of a video access unit is in turn input into the T-STD; and $T_P$ is the PTS value, the instant in which the video access unit should be decoded and presented at the output of the decoder T-STD for viewing.

The above mentioned times are obtained to calculate the change channel time during a multitude of channel changes in real time in a measured period of time $T_{MEA}$, which is the period during which the change channel time will be analyzed and measured, e.g., one hour. The time interval between two consecutive channel changes $T_{CCI}$ will be, for example, 10 msg.

The stream is analyzed in real time or offline to find video access units of intra type I. Each video access unit of intra type I enables separation of the stream into segments, where each segment contains one video intra access unit.

In the stream and during the duration of a segment (i), there is a multitude of PMT, PAT, PCR, etc. occurrences and, therefore, of the previously defined instants, with the following being sought and stored: $T_P(i) = T_{PTS}(i)$ where the

$T_P$ is of the video intra access unit of segment i; $T_{SAU}(i)$ is the $T_{SAU}$ of the video intra access unit of segment i; $T_{EAU}$ is the $T_{EAU}$ of the video intra access unit of segment i; $T_{PTS}(i)$ is the $T_{PTS}(i)$ of the video intra access unit of segment i - if the PTS is not available, it will be interpolated from the PTS of previous frames that have occurred after $T_{PMT}(i)$; $T_{PCR}(i)$ is the first $T_{PCR}$ in segment i that verifies $T_{PCR} > T_{PMT}(i)$ and $T_{PCR} < T_P(i)$; $T_{PMT}(i)$ is the $T_{PMT}$ closest to $T_{EAU}(i)$ but $\leq$ than $T_{PCR}$; and $T_{PAT}(i)$ is the $T_{PAT}$ closest to $T_{EAU}(i)$ but $\leq$ than $T_{PMT}$.

The temporal restrictions of the expressed instants are: $T_{PAT}(i) < T_{PMT}(i) < T_{PTS}(i) < T_{SAU}(i)$, and $T_{PMT}(i) < T_{PCR}(i) < T_P(i)$.

All these times follow the PCR of the stream and, in the event of PCR roll-over (restart from 0 of PCR counter), these should be corrected so that they will always be monotonically increased.

Segment i can be decoded if all the times are available and they can be used to begin the reproduction after a channel change.

If the times are not available or they are not available in the established time order, then the segment cannot be decoded and they cannot be used to begin the reproduction after the channel change. In the latter case, the length of segment i should be increased to include another decodable segment.

Once the times of each segment are extracted, the change channel time for each Tt(k) is calculated segment by segment until the end of the analysis:

$$\text{Ideal (minimum) change channel time} = T_{cct}(k) = T_P(i). - Tt(k), \quad T_{PAT}(i-1) \leq Tt(k) \leq T_{PAT}(i)$$

Hundreds of channel changes by real customers are accomplished simultaneously by a uniform distribution of Tt(k) over the measurement time $T_{MEA}$, i.e., one channel change every Change Channel Time Interval $T_{CCI}$ configures at the beginning of the measurement.

The embodiments and examples provided in this report are presented as the best explanation of this invention and its practical application, and in order to enable experts in the technique to put into practice and use the invention.

The description directly applies to any audio/video coder system or equipment such as MPEG1, MPEG2, MPEG4/AVC, MPEG4/AAC, VC1, etc. that uses standard MPEG2-TS to multiplex the individual audio and video components and to generate the TV channel. The description likewise applies to any other coding system even though it does not use MPEG2-TS as multiplexing frame, e.g., MPEG1 Systems, MPEG2 Program Stream, Windows ASF, Real Video, video/audio on RTP, etc.; this simply requires that the concepts used in MPEG2-TS (PAT, PMT, Video Intra Access Unit, PCR's, PTS's, etc.) be exchanged for the equivalents used in these other coding or multiplexing systems.

**Claims**

1. **Measurement procedure** of the change channel time in a decoder to decode a received digital TV signal before it is delivered to a screen for viewing by a viewer who selects a desired channel, **characterized** **in that** it includes the following stages:

   - tuning of the decoder to the coded signal stream MPEG2-TS received in the instant of time Tt(k) when the viewer executes the channel change,
   - measurement and storage of the following instants of time during the duration of a segment (i): $T_P(i) = T_{PTS}(i)$ where the $T_P$ is of the video intra access unit of segment i; $T_{SAU}(i)$ is the $T_{SAU}$ of the video intra access unit of segment i; $T_{EAU}$ is the $T_{EAU}$ of the video intra access unit of segment i; $T_{PTS}(i)$ is the $T_{PTS}(i)$ of the video intra access unit of segment i - if the PTS is not available, it will be interpolated from the PTS of previous frames that have occurred after $T_{PMT}(i)$; $T_{PCR}(i)$ is the first $T_{PCR}$ in segment i that verifies $T_{PCR} > T_{PMT}(i)$ and $T_{PCR} < T_P(i)$; $T_{PMT}(i)$ is the $T_{PMT}$ closest to $T_{EAU}(i)$ but $\leq$ than $T_{PCR}$; and $T_{PAT}(i)$ is the $T_{PAT}$ closest to $T_{EAU}(i)$ but $\leq$ than $T_{PMT}$.

2. **Procedure** as per claim 1, **characterized** **in that,** additionally, the following temporal restrictions should be fulfilled: $T_{PAT}(i) < T_{PMT}(i) < T_{PTS}(i) < T_{SAU}(i)$, and $T_{PMT}(i) < T_{PCR}(i) < T_P(i)$

3. **Procedure** as per claim 2, **characterized** **in that,** additionally, it includes the calculation of the change channel time for each Tt(k) segment by segment until the end of the analysis:

Ideal (minimum) change channel time = $T_{cct}(k) = T_P(i). - Tt(k)$, $T_{PAT}(i-1) \leq Tt(k) \leq T_{PAT}(i)$

4. **Analyzer** of the change channel time in a decoder to decode a received digital TV signal before it is delivered to a screen for viewing by a viewer who selects a desired channel, **<u>characterized</u> in that** the decoder is capable of tuning a coded signal stream MPEG2-TS, received from a transmitter of a digital TV system, in the instant of time Tt(k) when the viewer executes the channel change; the analyzer is capable of measuring and storing the following instants of time during the duration of a segment (i): $T_P(i) = T_{PTS}(i)$ where the $T_P$ is of the video intra access unit of segment i; $T_{SAU}(i)$ is the $T_{SAU}$ of the video intra access unit of segment i; $T_{EAU}$ is the $T_{EAU}$ of the video intra access unit of segment i; $T_{PTS}(i)$ is the $T_{PTS}(i)$ of the video intra access unit of segment i

   - if the PTS is not available, it will be interpolated from the PTS of previous frames that have occurred after $T_{PMT}(i)$; $T_{PCR}(i)$ is the first $T_{PCR}$ in segment i that verifies $T_{PCR} > T_{PMT}(i)$ and $T_{PCR} < T_P(i)$; $T_{PMT}(i)$ is the $T_{PMT}$ closest to $T_{EAU}(i)$ but $\leq$ than $T_{PCR}$; and $T_{PAT}(i)$ is the $T_{PAT}$ closest to $T_{EAU}(i)$ but $\leq$ than $T_{PMT}$

5. **Analyzer** as per claim 4, **<u>characterized</u> in that**, additionally, it is configured to verify compliance with the temporal restrictions: $T_{PAT}(i) < T_{PMT}(i) < T_{PTS}(i) < T_{SAU}(i)$, and $T_{PMT}(i) < T_{PCR}(i) < T_P(i)$

6. **Analyzer** as per claim 5, **<u>characterized</u> in that,** additionally, it is adapted to calculate the change channel time for each Tt(k) segment by segment until the end of the analysis:

   Ideal (minimum) change channel time = $T_{cct}(k) = T_P(i). - Tt(k)$, $T_{PAT}(i-1) \leq Tt(k) \leq T_{PAT}(i)$

7. **A computer readable medium** operable with a computer to execute the transactions of direct access to a computer memory; the medium has stored for this purpose instructions executable by the computer doing the time calculation operations of the method of claim 1; determination of compliance with the restrictions of claim 2; calculation of the change channel time as per claim 3

8. **A readable carrier medium** that transports the computer executable programs as per claim 7.

**FIG. 1**

Europäisches
Patentamt

European
Patent Office

Office européen
des brevets

**EUROPEAN SEARCH REPORT**

Application Number

EP 08 38 2032

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 703 719 A (SAMSUNG ELECTRONICS CO LTD [KR]) 20 September 2006 (2006-09-20) * abstract * * page 2, paragraph 2-14 * * page 3, paragraph 16 * ----- | 1-8 | INV. H04N17/04 H04N5/44 |
| A | US 2002/087999 A1 (KASHIMA KOJI [US]) 4 July 2002 (2002-07-04) * page 3, paragraph 19-21 * * figure 7 * ----- | 1-8 | |
| A | "A Guide to MPEG Fundamentals and Protocol Analysis" [Online] 1 March 2007 (2007-03-01), TEKTRONIX, INC , XP002505551 Retrieved from the Internet: URL:www.tek.com/products/video_test/mpeg_monitors.html> [retrieved on 2008-11-25] * page 43, paragraph 6.2 * * page 44, paragraph 6.3 * * page 46, paragraph 8.1 * * page 47, paragraph 8.3 * ----- | 1-8 | TECHNICAL FIELDS SEARCHED (IPC) H04N |

The present search report has been drawn up for all claims

| Place of search | Date of completion of the search | Examiner |
|---|---|---|
| The Hague | 26 November 2008 | Troya Chinchilla, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 38 2032

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2008

| Patent document cited in search report | | Publication date | Patent family member(s) | | Publication date |
|---|---|---|---|---|---|
| EP 1703719 | A | 20-09-2006 | CN | 1835596 A | 20-09-2006 |
| | | | JP | 2006262483 A | 28-09-2006 |
| | | | KR | 20060100124 A | 20-09-2006 |
| | | | US | 2006209907 A1 | 21-09-2006 |
| US 2002087999 | A1 | 04-07-2002 | NONE | | |

EPO FORM P0459

For more details about this annex : see Official Journal of the European Patent Office, No. 12/82